## Europäisches Patentamt
## European Patent Office
## Office européen des brevets

(11) Publication number: **0 222 442**
**B1**

# EUROPEAN PATENT SPECIFICATION

(45) Date of publication of the patent specification:
11.04.90

(51) Int. Cl.⁴: **G01T 1/36**, G01N 23/207

(21) Application number: 86201900.7

(22) Date of filing: 31.10.86

(54) Improved double crystal X-ray spectrometer.

(30) Priority: 04.11.85 US 795011

(43) Date of publication of application:
20.05.87 Bulletin 87/21

(45) Publication of the grant of the patent:
11.04.90 Bulletin 90/15

(84) Designated Contracting States:
DE FR GB NL

(56) References cited:
EP-A- 0 095 207
EP-A- 0 137 547
GB-A- 1 028 879

APPLIED OPTICS, vol. 19, no. 19, 1st October 1980,
pages 3306-3312, Optical Society of America, New York,
US; H.W. SCHNOPPER et al.: "Spherical crystal imaging
spectrometer (SCIS) for cosmic x-ray spectroscopy"

(73) Proprietor: **North American Philips Corporation,
100 East 42nd Street 9th Floor, New York,
N.Y. 10017(US)**

(72) Inventor: **Jenkins, Ronald, INT. OCTROOIBUREAU B.V.
Prof. Holstlaan 6, NL-5656 AA Eindhoven(NL)**
Inventor: **Nicolosi, Joseph, INT. OCTROOIBUREAU B.V.
Prof. Holstlaan 6, NL-5656 AA Eindhoven(NL)**
Inventor: **Cruz, Alvaro, INT. OCTROOIBUREAU B.V. Prof.
Holstlaan 6, NL-5656 AA Eindhoven(NL)**

(74) Representative: **Scheele, Edial François et al,
INTERNATIONAAL OCTROOIBUREAU B.V. Prof.
Holstlaan 6, NL-5656 AA Eindhoven(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention involves an improved double crystal spectrometer in which at least two pairs of crystals for simultaneous measurement of two wavelength ranges can be utilized alternatively.

In U.S. Patent No. 4,472,825 by Jenkins, one of the present inventor, a double crystal X-ray spectrometer is provided, in which two angularly disposed diffracting crystals are provided for receiving differently collimated X-rays in order to provide simultaneous acquisition of spectroscopic data over two different wavelength ranges. Namely, this prior arrangement involves two crystals and corresponding detectors to simultaneously measure long and short wavelength spectra.

The present invention is an improvement to this previous arrangement by way of forming at least one additional pair of split crystals in a manner to alternatively provide additional wavelength spectra for diffraction.

Namely, each pair of two crystals measures two different wavelength ranges, and each pair of two crystals may be placed in the X-ray beam without having to take a previous double crystal arrangement out of the spectrometer. Such changing of diffraction crystals would normally involve breaking the vacuum in the spectrometer, changing the crystals, and then again evacuating the spectrometer before use.

In accordance with the present invention, different pairs of diffracting crystals are formed on a drum which may be rotated so as to bring one of the different pairs into an X-ray optical path. Such changing of pairs of crystals according to the present invention can be done without breaking the vacuum in the spectrometer and going through a time involved change-over process.

The features of the present invention may be more clearly seen by reference to the drawing figures which illustrate without limitation an aspect and embodiment of the present invention, and wherein:

Figure 1 illustrates a partial arrangement of the X-ray optics used in the spectrometer system, and

Figure 2 illustrates, in partial schematic view, the crystal changer of the present invention.

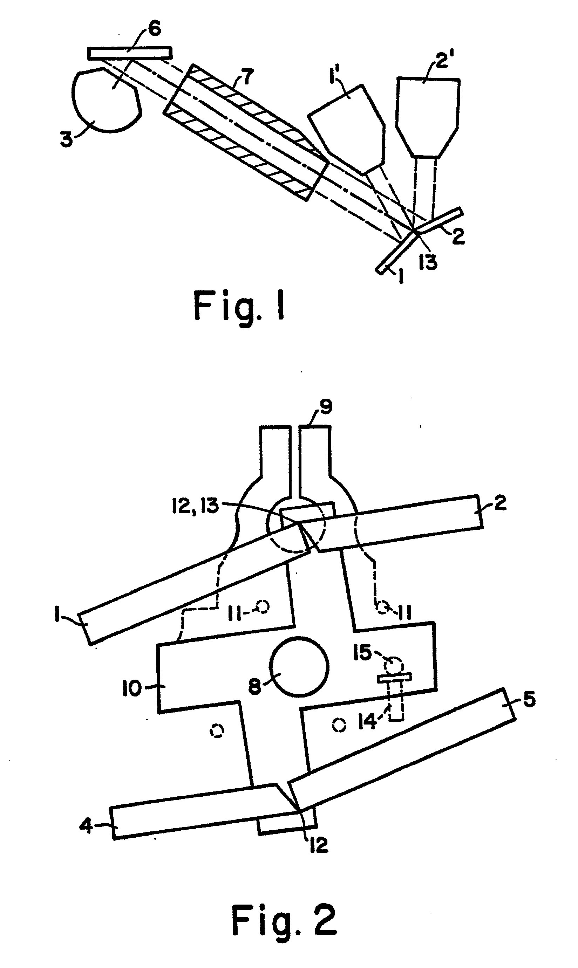

In Figure 1 an X-ray tube 3 directs primary X-ray onto a specimen 6 which in turn generates characteristic spectra from the specimen through, for example, collimator 7 onto a pair of half crystals 1 and 2. The spectra are diffracted from these half crystals to detectors 1' and 2', respectively. The crystals 1 and 2 are mounted edge-on at a surface angle of about 15°. The two detectors 1' and 2' are mounted 30° apart as a single assembly, with detector 1' being aligned with the half crystal 1 and with the detector 2' being aligned with the half crystal 2.

A goniometer (not illustrated) moves the two crystals and the two detectors in the usual 2:1 relationship to maintain the geometrical conditions for two integrated spectrometer channels. The two detectors 1' and 2' typically involve a flow counter detector and a high pressure sealed counter detector with the flow counter detector being aligned to the larger "d" spacing half crystal for long wavelength X-rays, and the sealed counter detector being aligned to the smaller "d" spacing half crystal for short wavelengths.

The features of the present invention may be seen by reference to Figure 2 in which the crystal changer having at least two pairs of crystals 1 and 2 or 4 and 5 may be seen. In this structure, a motor rotates either crystal pair 1 and 2 or 4 and 5 into the X-ray optical path relative to the X-ray spectra from the specimen 6.

The two pairs of crystals 1,2 and 4,5 (dual channel system), or two single crystals (single channel system), arranged 180° apart, may be mounted on a rotatable support 10. Each crystal can be individually adjusted by adjustment screws 11 for maximum intensity.

Each pair of crystals are hinged together to the rotatable support 10 with two pins 12, one at each side. The pins 12 are pressed into the rotatable support 10 so that the crystals can be adjusted independently without changing the position of the adjacent one.

The crystal changer is driven by a motor (not shown), such as an electrical micromotor or D.C. gear motor. The stator 8 of the motor is coupled to the rotatable support 10 and rotates while the motor shaft, located on the center of the crystal changer and fastened to a fixed rod, is fixed to a support 9.

The support 9, mounted and clamped to the θ-shaft, holds the fixed rod (not shown), two adjusting screws 14, two signal microswitches (not shown) and a set of electrical contacts (not shown).

The rotation of the crystal changer is limited by a pin 15, pressed into the rotatable support 10, which stops against either of two screws, such as the screw 14, positioned at each side of the support 9. Each of these screws is adjusted so that each of the pins 12 coincides with the θ-2θ center 13.

The rotation mechanism of the crystal changer is fixed by the support 9 to the θ-axis of the goniometer. Individual adjustment can be made by way of the adjustment screws 11 to set alignment of the crystals relative to the X-ray beam.

## Claims

1. In an X-ray spectrometer comprising an X-ray source, a specimen receiving X-rays from said source, a collimator for collimating X-rays from said specimen, a pair of diffracting crystals receiving said X-rays from said collimator, and a pair of detectors simultaneously receiving X-rays from said pair of diffracting crystals, characterized by a mechanism for rotatably exchanging said pair of diffracting crystals for at least a second pair of diffracting crystals, said second pair of diffracting crystals measuring different wavelength ranges than the preceding pair of diffracting crystals.

2. An X-ray spectrometer according to claim 1, wherein each pair of diffracting crystals are hinged together by a pin to a rotatable supported.

3. An X-ray spectrometer according to claim 1 or claim 2, wherein each diffracting crystals of said pair of diffracting crystals is individually adjustable in said X-ray beam.

## Patentansprüche

1. Röntgenspektrometer mit einer Röntgenquelle, einer aus dieser Quelle Röntgenstrahlung empfangenden Probe, einem Kollimator zum Kollimieren von Röntgenstrahlung aus dieser Probe, einem Paar von Diffraktionskristallen, die Röntgenstrahlung aus dem Kollimator empfangen, und einem Paar von Detektoren, die gleichzeitig Röntgenstrahlung aus dem Diffraktionskristallenpaar empfangen, dadurch gekennzeichnet, daß eine Vorrichtung zum drehbaren Austauschen des Diffraktionskristallenpaares gegen wenigstens ein zweites Diffraktionskristallenpaar vorgesehen ist, wobei dieses zweite Diffraktionskristallenpaar andere Wellenlängenbereiche als das vorige Diffraktionskristallenpaar mißt.

2. Röntgenspektrometer nach Anspruch 1, worin jedes Diffraktionskristallenpaar mit Hilfe eines Stiftes an einem drehbaren Träger gelenkig befestigt ist.

3. Röntgenspektrometer nach Anspruch 1 oder 2, worin jeder Diffraktionskristall des Diffraktionskristallenpaars im Röntgenstrahl einzeln einstellbar ist.

## Claims

1. Spectromètre à rayons X comprenant une source de rayons X, un échantillon recevant des rayons X de la source, un collimateur pour collimater les rayons X provenant de l'échantillon, une paire de cristaux diffringents recevant les rayons X du collimateur, et une paire de détecteurs recevant simultanément des rayons X de la paire de cristaux diffringents, caractérisé par un mécanisme pour échanger par rotation la paire de cristaux diffringents et la remplacer par au moins une seconde paire de cristaux diffringents, la seconde paire de cristaux diffringents mesurant des gammes de longueurs d'ondes différentes de celles de la paire précédente de cristaux diffringents.

2. Spectromère à rayons X suivant la revendication 1, dans lequel les cristaux diffringents de chaque paire sont articulés ensemble par un axe à un support tournant.

3. Spectromètre à rayons X suivant la revendication 1 ou 2, dans lequel chaque cristal diffringent de la paire de cristaux diffringents est individuellement réglable dans le faisceau de rayons X.

Fig. I

Fig. 2